Europäisches Patentamt

European Patent Office

Office européen des brevets

(11) Publication number: **0 115 953**
**B1**

(12) **EUROPEAN PATENT SPECIFICATION**

(45) Date of publication of patent specification: **18.01.89**

(51) Int. Cl.⁴: **G 01 N 27/12**

(21) Application number: **84300573.7**

(22) Date of filing: **30.01.84**

(54) Gas sensor.

(30) Priority: 03.02.83 JP 15464/83
22.03.83 JP 39724/83 u
20.04.83 JP 68396/83
28.06.83 JP 98725/83 u
23.07.83 JP 113726/83 u

(43) Date of publication of application:
15.08.84 Bulletin 84/33

(45) Publication of the grant of the patent:
18.01.89 Bulletin 89/03

(84) Designated Contracting States:
DE FR GB

(56) References cited:
EP-A-0 038 078
GB-A-1 477 082

PATENT ABSTRACTS OF JAPAN, vol. 6, no.
159, 20th August 1982, page (P-136) (1037); &
JP-A-57-076447 (TOKYO SHIBAURA DENKI
K.K.) 13-05-1982

(73) Proprietor: NEW COSMOS ELECTRIC CO., LTD.
2-5-4, Mitsuya-naka Yodogawa-ku
Osaka-shi Osaka-fu (JP)

(72) Inventor: Komatsu, Koji
3-15-14, Higashi-machi
Hotarugaike Toyonaka-shi Osaka-fu (JP)
Inventor: Sakai, Sai
24-1002, 13-ban 1-chome, Niitaka
Yodogawa-ku Osaka-shi Osaka-fu (JP)
Inventor: Fukui, Kiyoshi
8-go, 1-ban 2-chome
Horidone-higashi Wakayama-ken (JP)

(74) Representative: Allam, Peter Clerk et al
LLOYD WISE, TREGEAR & CO. Norman House
105-109 Strand
London WC2R 0AE (GB)

Courier Press, Leamington Spa, England.

# EP 0 115 953 B1

**Description**

This invention relates to a gas sensor formed by applying a semiconductor of metal oxide to an electric resistor, and is aimed at providing such a gas sensor which is of a simple construction and stable operation, which requires a single electric source as distinct from conventional sensors requiring two kinds of electric source.

Most of the gas sensors utilizing a semiconductor of metal oxide such as tin oxide ($SnO_2$), zinc oxide, ferric oxide or the like, which are on the market or in the process of research and development at present, require two kinds of electrodes, namely a sensor electrode and a heater electrode. These sensors must be formed with film-like electrodes for sensing and heating, one on a front face of a base plate and the other on a back face thereof, and include four lead wires. Consequently, these sensors involve a complicated manufacturing process and are costly. Known gas sensors also include the type comprising a quartz pipe, an electrode of platinum film trimmed in a spiral form on the quartz pipe, a gas sensing layer consisting of a semiconductor of metal oxide covering the entire electrode, and heating means mounted in the quartz pipe. This type too has the disadvantage of requiring four lead wires and two kinds of electric source for the electrode and the heating means.

On the other hand, some known composite sensors which have only two lead wires include the type comprising two gas sensing units having a semiconductor adhered to a coiled resistor, the two gas sensing units being assembled in a bridge. The resistance of one of the units decreases and conversely the resistance of the other unit increases as gas adheres thereto. The units are interconnected in series, and therefore, as the resistance of one of the units is reduced through contact with gas, an increased voltage acts on the other unit, raising the temperature of the latter. Gas sensing units utilizing a semiconductor of metal oxide depend largely on temperature for their gas sensitivity. Thus, changes in the resistance of the two units each bring about complex temperature changes on the sensor, rendering the gas sensitivity of the sensor unstable, particularly in the presence of two or more kinds of gas. Furthermore, the two gas sensing units constituting the sensors have different response speeds upon contact with gas, which may result in abnormalities in output of the sensor.

In addition, known gas sensors generally have a disadvantage of depending largely on humidity for their sensitivity.

In EP—A—0038078 is disclosed a gas sensor comprising an electric resistor of platinum and a semiconductor sensor formed of a metal oxide such as $SnO_2$ which covers the electric resistor. In one embodiment, the ratio Ro of the combined resistance of the resistor and the semiconductor to the resistance ro of the electric resistor at a temperature of 200°C is within the range of 0.45<Ro/ro<0.95. The gas sensor also includes a separate heater for the semiconductor.

The invention has been made having regard to the above state of the art, and aims to provide a two terminal gas sensor comprising a semiconductor of sintered metal oxide applied to a single electric resistor acting both as heating means and also as a sensing electrode whose resistance varies by gas adhesion. In other words, the object of this invention is to provide a gas sensor which is simple of construction but has a high degree of sensitivity and reliability.

To achieve the above object, a gas sensor according to this invention comprises an electric resistor of a noble metal, and a sintered piece of a metal oxide covering the resistor, the sintered piece being a semiconductor, wherein the ratio of the combined resistance $Ro$ of the resistor and the semiconductor to the resistance $ro$ of the electric resistor in the ambient air is within the range of 0.45<Ro/ro<0.95, whereby the electric resistor is adapted to serve as a heater and also as an electrode for detecting a decrease in the electric resistance of the semiconductor in response to gas adsorption by the semiconductor, and whereby the gas sensor does not comprise an independent heater for said electric resistor.

The gas sensor of this invention may take various forms, which however all share the basic features set out above. Thus all the embodiments of the invention hereinafter described in detail have two lead wires and are operable by a single electric source to provide data with a high degree of sensitivity and reliability.

This invention is hereinafter described in detail with reference to the drawings showing various embodiments thereof, in which:—

Fig. 1 is a plan view of a gas sensor according to one embodiment of the invention,

Fig. 2 is a section taken on line A—A' in Fig. 1,

Fig. 3 is a front view of a modified example including a coiled platinum wire,

Fig. 4 is a view showing an example of measuring electric circuit including a sensor of Fig. 1,

Fig. 5 is a graph showing a relationship of gas sensitivity with respect to Ro/ro,

Fig. 6 is a graph showing response characteristics of the gas sensor of Fig. 1 with respect to ethanol vapor,

Fig. 7 is a graph showing response characteristics of the gas sensor of Fig. 1 with respect to hydrogen gas,

Fig. 8 is a graph showing response characteristics of a gas sensor according to a second embodiment of this invention,

Fig. 9 is a schematic view in section of a third embodiment of this invention,

Fig. 10 is a view showing a reaction between surface hydroxyl groups and organic silicone of the sensor according to the third embodiment,

2

Fig. 11 is a graph comparing sensitivity changes with the passage of time between the sensor according to the third embodiment and a sensor omitting the surface coating of the third embodiment,

Fig. 12 is a graph showing hydrogen gas sensitivity changes with the passage of time of a sensor according to a fourth embodiment of the invention, and

Fig. 13 is a graph showing humidity dependency in detection of methane gas by a sensor according to a fifth embodiment of the invention.

First embodiment

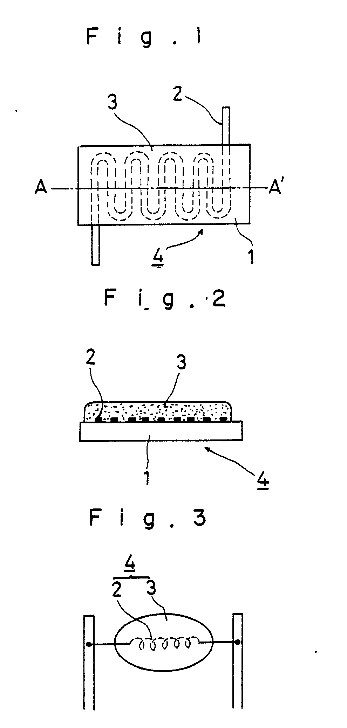

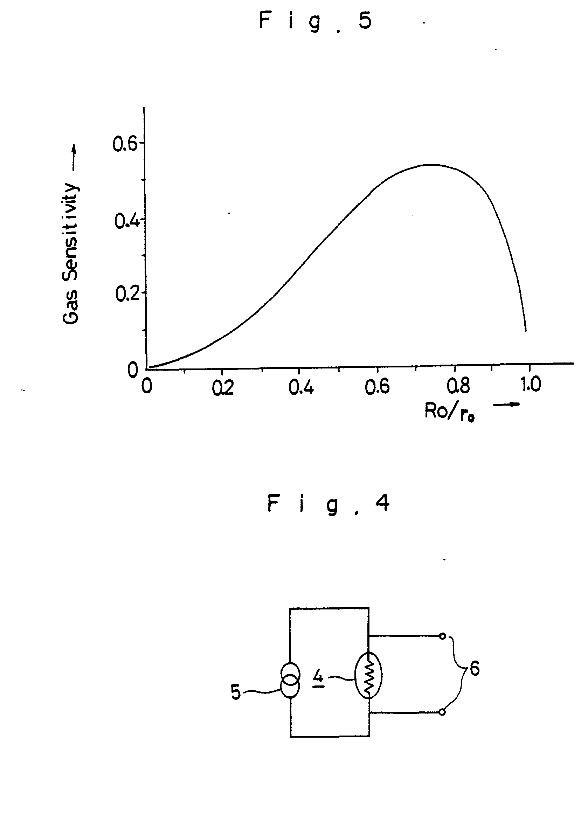

Referring to Figs. 1 and 2, the gas sensor 4 shown comprises an alumina base plate 1, a platinum film electric resistor 2 formed by the vapor deposition method in a winding shape on the alumina base plate 1, and a sintered piece of tin oxide 3 mounted on the alumina base plate 1 to cover the resistor 2. Alternatively, the resistor 2 may consist of a coiled platinum wire extending centrally of the sintered piece 3, as shown in Fig. 3.

According to this invention, the platinum film resistor 2 acts both as gas detection electrode and heating means, and the specific electric resistance of the powder employed for the sintered piece of tin oxide 3 is selected so as to provide an optimal relationship between the resistance of the resistor 2 and that of the sintered piece 3. This diminishes temperature changes of the gas sensor 4 during its contact with gas and permits its output to be obtained with a high degree of sensitivity.

More particularly, powder having such a specific electric resistance is selected that provides a relationship, $0.45 < Ro/ro < 0.95$, wherein $ro$ is the resistance of the platinum film resistor 2 and $Ro$ is a combined resistance of the platinum film resistor 2 and the sintered piece of tin oxide 3. The above specific resistance of the sintered piece of tin oxide is achieved, for example, by adding a very small amount of antimony pentoxide.

Fig. 4 shows an example of drive circuit for the described gas sensor, in which the gas sensor 4 is connected to a constant current electric source 5 and voltage detector terminals 6 are provided at respective ends of the gas sensor 4.

Fig. 5 shows the relationship of gas sensitivity with respect to Ro/ro, and the gas sensitivity here is represented by apparent changes in the overall resistance of the gas sensor 4 when the resistance of the sintered piece of metal oxide 3 falls in response to the gas. The gas sensitivity has a value derived from the following $\Delta R$ value divided by ro:

$$\Delta R = Ro - Rg$$

wherein Ro and Rg are the resistance values of the gas sensor 4 in the air and in the gas, respectively.

As seen, an optimum gas sensitivity, represented by $\Delta R/ro$ being greater than 0.15, and preferably greater than 0.3, is achieved in the case of $0.45 < Ro/ro < 0.95$.

While a platinum film resistor 2 is used in this and subsequent embodiments, a film of a noble metal other than platinum or a coiled wire of any suitable noble metal may also be employed. Other noble metals useful herein include gold, silver, rhodium, palladium, indium, osmium and ruthenium.

The sintered piece 3 of metal oxide acting as semiconductor may be a sintered piece of a metal oxide other than tin oxide, for example ferric oxide, zinc oxide or the like. Similarly, the alumina base plate 1 may be replaced by another kind of heat resisting, electrically insulating base plate.

The two-terminal type gas sensor having the described construction is operable by a single electric source and by a simple drive circuit. Therefore, such a sensor as a whole is not only economical but highly reliable.

Second embodiment

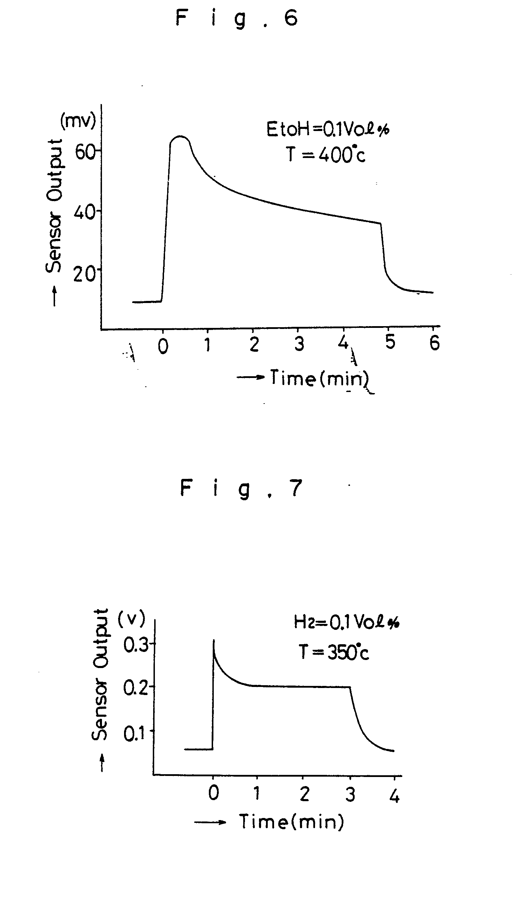

The sintered piece of metal oxide 3 shown in Fig. 1 is active as an oxidation catalyzer, and oxidation takes place on the surface of the gas sensor 4 when in contact with a combustible gas. Therefore, when the gas sensor 4 is placed in a gas of certain concentration, its output signal changes with the passage of time. For example, where the gas sensor employing zinc oxide for the sintered piece 3 is operated at 400°C in air containing a 0.1 vol. percent of ethanol, its output attenuates with the passage of time, without keeping steady, as seen in Fig. 6.

Further, where the gas sensor 4 having the sintered piece 3 whose main component is tin oxide is operated at about 350°C, an overshoot appears on a graph of the output value responsive to a gas such as hydrogen (density 0.1%) or ethanol, as seen in Fig. 7. Such a characteristic is a disadvantage to designing of a circuit for setting an alarm level and the like of a gas alarm.

The second embodiment eliminates the above disadvantage. One of the causes of response characteristic abnormality is reduction in the real density reaching the inside of the sintered layer which is due to oxidation and consumption of the gas on the surface of the sintered piece of metal oxide 3. Another cause is changes in the gas sensitivity with the passage of time which is due to a rise in the temperature at gas sensing parts because of oxidation heat. Therefore, the gas sensor according to the second embodiment includes a sintered piece of metal oxide treated so as to have a restrained oxidation activity. More particularly, the sintered piece of metal oxide has a surface carrying a material inactive to oxidize gases, thereby to kill activity points of the surface and to restrain oxidation of gases.

For the second embodiment, a method is adopted to have the sintered piece of metal oxide 3 soaked with a diluted aqueous solution of at least one type of salt of metal selected, for example, from metals such as bismuth (Bi), phosphorous (P), lead (Pb), titanium (Ti), silicon (Si), aluminum (Al) and the like, and provided with a heat treatment after drying. Alternatively, the sintered piece of metal oxide 3 is caused to carry a very small amount of oxidation-preventing material on the surface by the chemical deposition method utilizing organo compounds of the foregoing metals.

In specific examples of the foregoing, the sintered piece of metal oxide 3 is soaked with a 0.01 mol % aqueous solution of compounds such as $H_3PO_4$, $Pb(NO_3)_2$, $TiCl_3$, $Bi(NO_3)_3 \cdot 5H_2O$ or the like, and is subjected to a thermal decomposition process at 600°C for one hour after drying.

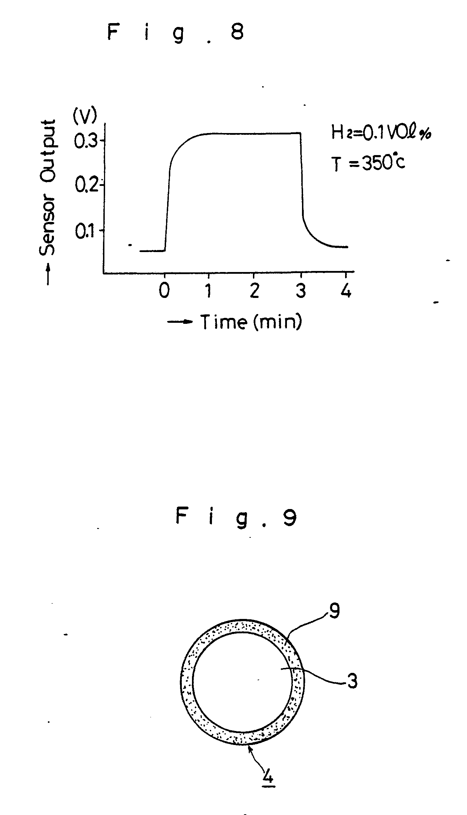

Fig. 8 shows gas response characteristics of the modified gas sensor 4 formed as above. As seen, it takes about a minute before the gas sensor 4 provides a steady output in the air containing a 0.1 percent of hydrogen gas, the output value being invariable thereafter.

Third embodiment

In recent years organic silicone materials such as silicone putty, silicone rubber, silicone oil and so forth have become widely used in construction. However, such organic silicone materials contain volatile oligomer which vaporizes into the ambient air. This silicone vapor can adhere to a gas sensor surface and causes catalytic poisoning which results in deterioration of the gas sensor with the passage of time. A gas alarm comprising a sintered piece such as of tin oxide will, when organic silicone adheres thereto, have an increased sensitivity to miscellaneous gases such as of alcohol, as shown by a dotted line B of Fig. 11, and give false alarms.

However, the sensitivity reduces where the sensor comprises an unsintered semiconductor film. For example, some gas alarms have nil sensitivity in one month and in the case of catalytic oxidation type gas alarms the sensitivity sometimes is lost in one week. This is considered to be caused by organic silicone molecules having strong adhering activity which cover the activity points on the surface of the gas sensor and thus prevent the gas from coming into contact with the activity points.

The third embodiment provides a gas sensor which is free from the above disadvantage. This gas sensor has an outer periphery formed with a porous layer of silica, alumina or silica-alumina including a high concentration of hydroxyl groups on the surface thereof which readily react with organic silicone molecules. Thus, organic silicone molecules are unable to reach the gas sensor surface per se, whereby changes with the passage of time in the sensitivity of the sensor caused by poisoning are restrained. Therefore, sensor durability is not affected even in adverse surroundings.

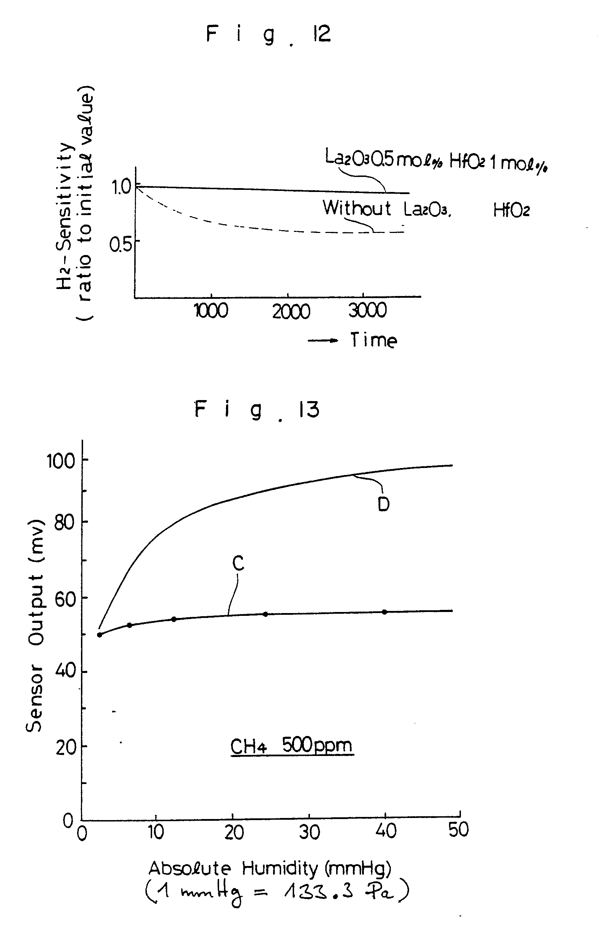

Fig. 9 schematically illustrates a gas sensor according to the third embodiment, in which 4 represents the gas sensor having the sintered piece of metal oxide 3 peripherally coated with a porous layer 9. This porous layer 9 comprises silica, alumina or silica-alumina which is prepared by the wet method, calcined under low temperature and left standing in the ambient air, and therefore includes more hydroxyl groups on its surface than oxides prepared by other methods such as the dry method. The alumina base plate 1 and the platinum film resistor 2 are omitted from Fig. 9 for simplicity.

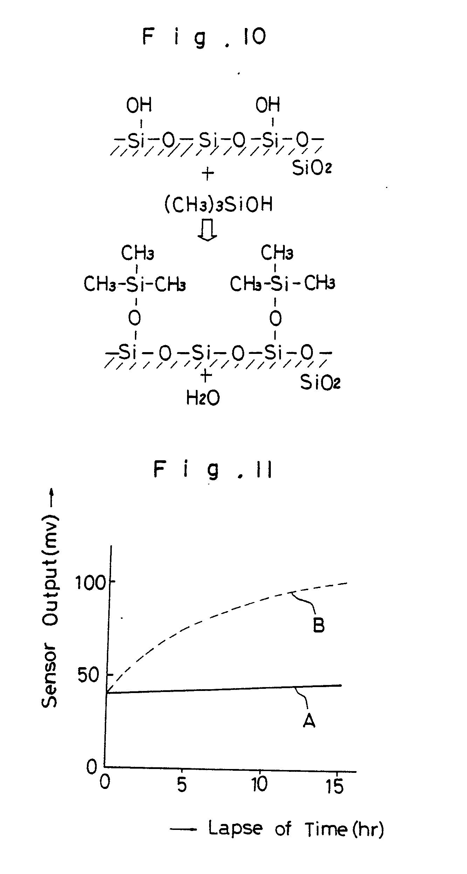

When organic silicone such as trimethylsilanol, i.e. $(CH_3)_3SiOH$, adheres to the surface of the porous layer 9 such as of silica, it readily reacts with the hydroxyl groups on the surface of the silica as shown in Fig. 10. Alumina too has surface hydroxyl groups likewise reactive with silanol groups. Organic silicone molecules are taken into the porous layer surface and thermally decompose into silica at once, without reaching the inner sintered piece of metal oxide 3. On the other hand, $H_2$, CO, $CH_4$ and other gases do not react at the porous layer 9 but reach the sintered piece of metal oxide 3 to be detected.

The formation of a porous layer 9 of alumina is described next. Ammoniacal water is dripped into an aqueous solution of aluminum nitrate to precipitate aluminum hydroxide. After treating this precipitate to produce boehmite, it is washed, dried and calcined at 550°C for five hours to obtain alumina powder. This alumina powder is kneaded with colloidal alumina and water into a mud-like paste. Then the paste is applied in a thickness of about 0.1 mm to the periphery of the sintered piece of metal oxide 3 as shown in Fig. 9, which is calcined after drying to obtain the poison-resisting gas sensor 4.

The porous layer 9 such as of alumina may be provided also on a sensor comprising the alumina base plate 1 including the platinum film resistor 2, and the sintered piece 3 of metal oxide such as tin oxide applied in a 0.4 mm thickness to the alumina base plate 1, as shown in Fig. 2. In this case, even if the sensor is contacted by air containing 0.4 percent of hydrogen gas and 10 ppm of trimethylsilanol, there occur little changes with the passage of time in the output of the sensor 4 as shown by a solid line A in Fig. 11.

It has been found that, apart from the above alumina powder, a like effect is produced by a sintered layer of silica or silica-alumina prepared by treating an aqueous solution of sodium silicate with a cation-exchange resin.

Fourth embodiment

The gas sensor provided with a semiconductor generally, is, in use, constantly energized to heat the sintered semiconductor portion to 300—450°C. Therefore, the continuing high temperature, especially at times of high humidity, brings about changes in the surface fine structure of the sintered semiconductor and an increase in the electroconductivity of the sintered semiconductor. Depending on the use period and on use surroundings, an alarm may be given when gas concentration is below a predetermined concentration.

The fourth embodiment provides a gas sensor free from the above disadvantage. The sintered piece used with this gas sensor is composed of tin oxide, an oxide of any lanthanide element in amount of from 0.01—20 mol % of the tin oxide, and an oxide of any element included in the periodic group IVa, i.e. titanium (Ti), zirconium (Zr), hafnium (Hf) or thorium (Th) in an amount of 0.01—20 mol %. The electric conductance and gas sensitivity of such a semiconductor are little affected by a long period of use at high temperatures or in a highly humid atmosphere. In other words, this gas sensor has a significantly improved stability relative to the passage of time.

One example of a manufacturing method for the above sintered piece is as follows: A predetermined amount of tin oxide ($SnO_2$) is measured, to which the oxide of lanthanide element and the oxide of an element included in the periodic group IVa are added in a predetermined ratio. The three components are then mixed one another with water, crushed and kneaded into a paste. Next, the paste is applied to the platinum film resistor, dried at 80°C for two hours, and is then calcined at 800°C for two hours (This method is hereinafter referred to as the kneading method).

In another method, tin oxide powder is first kneaded with water to form a paste which is applied to the platinum film resistor and allowed to dry as in the foregoing method, and is then "presintered" at 400°C for one hour. The "presintered" piece is soaked in an aqueous solution of a lanthanide element compound thermally decomposable into an oxide and a compound of element of the group IVa, to cause the latter two to be contained in the former in predetermined amounts. The resulting product is dried and is thereafter calcined at 800°C for two hours (This method is hereinafter referred to as the soaking method).

According to a further example, an aqueous solution of a lanthanide element compound and a compound of element of the group IVa is first added in a predetermined amount to an aqueous solution of tin (Sn) compound. Next, when the tin compound is caused to precipitate as hydroxide by adjusting the pH, these additives too are caused to coprecipitate as hydroxide at the same time. Thereafter, the precipitate is separated, dried, and formed into a uniform paste, which is applied to the platinum film resistor and, after drying, is calcined at 800°C for two hours (This method is hereinafter referred to as the coprecipitation method).

Gas sensors comprising the sintered semiconductors prepared by the kneading method, soaking method and coprecipitation method were maintained in energized, use state for 200 hours, and were made to contact gases of 1,000 ppm hydrogen, 1,000 ppm methane and 1,000 ppm ethanol respectively to measure the electric resistance in the respective cases, which was regarded as the initial resistance. Thereafter, changes in the gas sensitivity with the passage of time were measured by maintaining the gas sensors in the use state. Measuring results of each gas sensor are shown in Table 1, and sensitivity change characteristics (relative to the initial resistance) with the passage of time with respect to hydrogen in the case of Type 2 in Table 1 are shown in Fig. 12.

As seen from Table 1 and Fig. 12, stability in relation to the passage of time is markedly improved by the addition of the lanthanide oxide and the Group IVa element oxide.

It has been confirmed through tests that good results are obtained from lanthanide oxide and the group IVa element oxide each in the range of 0.01—20 mol % with respect to tin oxide.

TABLE 1

| Sample No. | Amounts of additives in $SnO_2$ | | | | R (resistance after 3000 hrs) | | | | Method of addition |
| | | | | | R'o (initial resistance) | | | | |
| | Lanthanide oxide | | IVa element oxide | | In air containing no gas | In air containing a gas of 1000 ppm | | | |
| | | mol % | | mol % | | $H_2$ | $CH_4$ | $C_2H_5OH$ | |
| 1 | $La_2O_3$ | 0.5 | $ZnO_2$ | 1 | 0.88 | 0.78 | 0.92 | 0.76 | (A) |
| 2 | $La_2O_3$ | 0.5 | $HfO_2$ | 1 | 0.92 | 0.81 | 0.92 | 0.78 | (A) |
| 3 | $CeO_2$ | 0.5 | $ZnO_2$ | 1 | 0.98 | 0.94 | 0.99 | 0.89 | (C) |
| 4 | $CeO_2$ | 0.5 | $ThO_2$ | 1 | 0.97 | 0.92 | 0.98 | 0.92 | (C) |
| 5 | $Nd_2O_3$ | 1 | $HfO_2$ | 2 | 0.95 | 0.84 | 0.96 | 0.84 | (B) |
| 6 | $Sm_2O_3$ | 1 | $ThO_2$ | 2 | 0.94 | 0.86 | 0.98 | 0.82 | (B) |
| 7 | $Dy_2O_3$ | 1 | $ThO_2$ | 2 | 0.96 | 0.90 | 0.98 | 0.86 | (B) |
| 8 | $La_2O_3$ | 2 | $TiO_2$ | 2 | 0.98 | 0.94 | 0.98 | 0.90 | (B) |
| | | | $ThO_2$ | 2 | | | | | |
| 9 | $La_2O_3$ | 2 | $ZrO_2$ | 5 | 0.98 | 0.97 | 0.98 | 0.94 | (A) |
| | $Sm_2O_3$ | 2 | | | | | | | |
| 10 | $CeO_2$ | 2 | $HfO_2$ | 5 | 0.97 | 0.98 | 0.96 | 0.96 | (C) |
| | $Dy_2O_3$ | 2 | $ThO_2$ | 5 | | | | | |
| Blank (without any additive) | | | | | 0.74 | 0.56 | 0.92 | 0.52 | |

Notes: The symbol (A), (B) and (C) respectively indicate the kneading, the soaking and the coprecipitation methods.

Fifth embodiment

In gas sensors having a sintered piece of metal oxide such as tin oxide or zinc oxide, it has heretofore been necessary to sinter the metal oxide at a low temperature below 800°C in order to maintain gas sensing activity. Sintering at 1,000°C or higher is impossible although it is suited to manufacture of a strong sintered piece. Therefore, the strength of sintered pieces has been markedly inferior to ordinary ceramics, and it has been impossible to achieve a mechanical strength high enough to withstand impacts and vibrations occurring during ordinary use. Sintered pieces which are prepared with use of a binder compound such as silica made of an organosilicic compound, silica sol or the like, retain silica or alumina therein. These impurities are hygroscopic and therefore the sensitivity of the gas sensor is very dependent upon humidity, which constitutes a disadvantage of undergoing changes in a highly humid atmosphere with the passage of time.

The fifth embodiment provides a gas sensor free from the above disadvantage. This sensor comprises a semiconductor manufactured by a method utilizing powder of tin oxide as binding agent to sinter ordinary particle size powder of tin oxide.

The fifth embodiment makes use of the nature of super fine powder of tin oxide which is an excellent binder in low temperature sintering. In other words, a mechanical strength adequate for practical purposes is achieved by sintering a mixture of conventionally used powder of tin oxide having a particle size 20 nm (200 Å) or more and super fine powder of tin oxide having an average particle size 5 nm (50 Å), for example.

Hydroxide obtainable from an aqueous solution of stannic chloride ($SnCl_4$) by the precipitation method has a primary particle size 2 nm (20 Å) or less. This hydroxide is dehydrated and oxidized in air at 200—300°C, and is then crushed into super fine powder having an average particle size 5 nm (50 Å). This super fine powder is mixed with $SnO_2$ powder having ordinary particle sizes, in a proportion about 30

6

percent of the total powder weight, the mixture being kneaded with water into a paste. Next, the paste is applied to the platinum film resistor, dried and sintered under 800°C for five hours, to finally arrive at the gas sensor 4.

Fig. 13 is a graph showing humidity dependency of the gas sensor 4 in methane gas, in which the curve $C$ represents dependence on absolute humidity (mmHg; 1 mmHg=133.3 Pa) of the sensor according to the fifth embodiment and the curve $D$ of a sensor employing silica sol as binding agent, and methane concentration in the gas is 500 ppm.

As seen from Fig. 13, the output of the gas sensor 4 according to this embodiment shows very little changes even below 2.67 kPa (20 mmHg) absolute humidity.

## Claims

1. A gas sensor comprising an electric resistor (2) of noble metal and a metal oxide (3) covering the electric resistor, the metal oxide being a semiconductor, wherein the metal oxide is formed as a sintered piece (3) and the ratio of the combined resistance Ro of the resistor (2) and the semiconductor (3) to the resistance ro of the resistor (2), Ro/ro, in the ambient air is within the range defined by the inequality of 0.45<Ro/ro<0.95, whereby the electric resistor (2) is adapted to serve as a heater and also as an electrode for detecting a decrease in the electric resistance of the semiconductor (3) in response to gas adsorption by said semiconductor (3), and whereby the gas sensor does not comprise an independent heater for said electric resistor (2).

2. A gas sensor as claimed in Claim 1, wherein the semiconductor (3) of metal oxide carries on a surface thereof at least one type of compound composed of at least one element selected from bismuth, phosphorus, lead, titanium, silicon and aluminum.

3. A gas sensor as claimed in Claim 1 or Claim 2, wherein the semiconductor (3) of metal oxide is peripherally coated with a porous layer (9) of at least one substance selected from the group consisting of silica, alumina and silica-alumina.

4. A gas sensor as claimed in any preceding claim, wherein the semiconductor (3) comprises a sintered piece of tin oxide containing at least one lanthanide oxide in an amount of 0.01—20 mol % of the tin oxide and at least one Group IVa element oxide in an amount of 0.01—20 mol % of the tin oxide.

5. A gas sensor as claimed in any preceding claim, wherein the semiconductor (3) comprises a sintered piece formed by using a binder compound including powder of tin oxide as a main component thereof.

## Patentansprüche

1. Ein Gasfühler bestehend aus einem elektrischen Widerstand (2) aus Edelmetall und einem Metalloxid (3), welches den elektrischen Widerstand bedeckt, wobei das Metalloxid ein Halbleiter ist, worin das Metalloxid als gesintertes Stück (3) gestaltet ist und das Verhältnis des kombinierten Widerstands Ro des Widerstandes (2) und des Halbleiters (3) zu dem Widerstand ro des Widerstandes (2), Ro/ro, in der umgebenden Luft innerhalb eines Bereiches ist, der durch die Ungleichheit 0,45—Ro/ro—0,95 definiert wird und wobei der elektrische Widerstand (2) derart gestaltet ist, um als Heizgerät wie auch als Elektrode für die Wahrnehmung des Abfalles des elektrischen Widerstandes des Halbleiters (3), aufgrund der Gasadsorption des genannten Halbleiters (3), zu dienen und wobei der Gasfühler kein unabhängiges Heizgerät für den genannten elektrischen Widerstand (2) miteinschließt.

2. Ein Gasfühler nach Anspruch 1, worin der Halbleiter (3) aus Metalloxid an seiner Oberfläche mindestens einen Typ einer Verbindung, bestehend aus mindestens einem Element, gewählt aus Wismut, Phosphor, Blei, Titan, Silizium und Aluminium, trägt.

3. Ein Gasfühler nach Anspruch 1 oder Anspruch 2, worin der Halbleiter (3) aus Metalloxid am Rand mit einer porösen Schicht (9) aus mindestens einer Substanz, gewählt aus der Gruppe bestehend aus Silizium, Aluminium und Silizium-Aluminium, beschichtet ist.

4. Ein Gasfühler gemäß einem der vorhergehenden Ansprüche, worin der Halbleiter (3) aus einem gesintertem Stück Zinnoxid besteht, welches mindestens ein Lanthanidoxid mit einem Anteil von 0,01—20 mol % des Zinnoxides enthält.

5. Ein Gasfühler gemäß einem der vorhergehenden Ansprüche, worin der Halbleiter (3) aus einem gesinterten Stück besteht, welches unter Verwendung eines Bindemittels, dessen Hauptkomponente Zinnoxid ist, geformt wurde.

## Revendications

1. Détecteur de gaz, comprenant un élément (2) résistant électrique en un métal noble et un oxyde de métal (3) recouvrant l'élément résistant électrique, l'oxyde de métal étant un semi-conducteur, détecteur dans lequel l'oxyde de métal est formé sous forme d'un morceau (3) fritté et le rapport de la valeur de la résistance combinée Ro de l'élément résistant (2) et du semi-conducteur (3) à la valeur de la résistance ro de l'élément résistant (2), Ro/ro, dans l'air ambient se situe dans l'intervalle défini par l'inégalité 0,45<Ro/ro<0,95, l'élément (2) résistant électrique étant conçu pour servir d'organe de chauffage et aussi d'électrode pour déceler une diminution de la valeur de la résistance électrique du semi-conducteur (3) en

# EP 0 115 953 B1

réponse à l'adsorption de gaz par ledit semi-conducteur (3), le détecteur de gaz ne comprenant pas d'organe indépendant pour le chauffage dudit élément (2) résistant électrique.

2. Détecteur de gaz tel que revendiqué à la revendication 1, dans lequel le semi-conducteur (3) en oxyde de métal porte à sa surface au moins un type de composé comportant au moins un élément choisi parmi le bismuth, le phosphore, le plomb, le titane, le silicium et l'aluminium.

3. Détecteur de gaz tel que revendiqué à la revendication 1 ou à la revendication 2, dans lequel le semi-conducteur (3) en oxyde de métal est revêtu à sa périphérie d'une couche (9) poreuse d'au moins une substance choisie parmi de la silice, de l'alumine et de la silice-alumine.

4. Détjcteur de gaz tel que revendiqué dans l'une quelconque des revendications précédentes, dans lequel le semi-conducteur (3) comprend un moreceau fritté d'oxyde d'étain contenant au moins un oxyde de la famille des lanthanides, présent en une quantité de 0,01 à 20 moles % de l'oxyde d'étain, et au moins un oxyde d'un élément du groupe IVa, présent en une quantité de 0,1 à 20 moles % de l'oxyde d'étain.

5. Détecteur de gaz tel que revendiqué dans l'une quelconque des revendications précédentes, dans lequel le semi-conducteur (3) comprend un morceau fritté, formé par l'utilisation d'un liant comprenant de la poudre d'oxyde d'étain comme constituant principal.

Fig. 1

Fig. 2

Fig. 3

1

Fig. 5

Fig. 4

# F i g . 6

EtoH=0.1Vol%
T=400°c

# F i g . 7

H2=0.1Vol%
T=350°c

Fig. 8

Fig. 9

Fig. 12

H₂-Sensitivity (ratio to initial value)

La₂O₃0.5moℓ% HfO₂ 1moℓ%

1.0

Without La₂O₃,    HfO₂

0.5

1000    2000    3000

⟶ Time

Fig. 13

Sensor Output (mv)

100

80

D

60

C

40

20

CH₄ 500ppm

0

0    10    20    30    40    50

Absolute Humidity (mmHg)
(1 mmHg = 133.3 Pa)

Fig. 10

Fig. 11